(19) **Europäisches Patentamt**

**European Patent Office**

**Office européen des brevets**

(11) **EP 0 703 464 B1**

(12) **EUROPÄISCHE PATENTSCHRIFT**

(45) Veröffentlichungstag und Bekanntmachung des Hinweises auf die Patenterteilung:
**31.01.2001 Patentblatt 2001/05**

(51) Int Cl.⁷: **G01S 7/02**

(21) Anmeldenummer: **95114457.5**

(22) Anmeldetag: **14.09.1995**

(54) **Polarimetrisches Radarverfahren und polarimetrische Radaranordnung**

Polarimetric radar system and method

Procédé et système de radar polarimétrique

(84) Benannte Vertragsstaaten:
**DE ES FR GB IT**

(30) Priorität: **22.09.1994 DE 4433789**

(43) Veröffentlichungstag der Anmeldung:
**27.03.1996 Patentblatt 1996/13**

(73) Patentinhaber: **DaimlerChrysler AG**
**70567 Stuttgart (DE)**

(72) Erfinder:
• **Schneider, Robert**
**D-89233 Neu-Ulm (DE)**
• **Wanielik, Gerd, Dr.**
**D-89079 Ulm (DE)**
• **Wenger, Josef, Dr.**
**D-89250 Senden (DE)**

(74) Vertreter: **Fröhling, Werner Otto, Dr. et al**
**DaimlerChrysler AG,**
**Intellectual Property Management,**
**Sedanstr. 10/Gebäude 17**
**89077 Ulm (DE)**

(56) Entgegenhaltungen:
| | |
|---|---|
| DE-C- 3 523 876 | FR-A- 2 489 965 |
| FR-A- 2 662 262 | FR-A- 2 681 140 |
| US-A- 4 849 762 | US-A- 5 130 711 |

**Beschreibung**

Die Erfindung betrifft ein polarimetrisches Radarverfahren und eine polarimetrische Radaranordnung.

Polarimetrische Radarverfahren und -anordnungen ermöglichen gegenüber dem nichtpolarimetrischen Fall zusätzliche Störunterdrückungsmaßnahmen und eine verbesserte Zielentdeckung sowie durch Ermittlung charakteristischer polarisationsabhängiger Streueigenschaften eines Ziels eine Zielklassifikation und/oder Zieltrennung in Mehrfachzielsituationen. Als Streucharakteristik wird im allgemeinen eine 2x2-Streumatrix bestimmt, indem in orthogonalen Polarisationen Sendesignale ausgesandt und in orthogonalen Polarisationen Empfangssignale aufgenommen und ausgewertet werden. Dies erfordert zumindest hinsichtlich der Sendesignale ein zeitsequentielles Vorgehen, wodurch sich bei einer Relativbewegung zwischen Radaranordnung und Ziel den Empfangssignalen eine Dopplerkomponente überlagert, die durch Ermittlung der Relativgeschwindigkeit durch eine Korrekturrechnung wieder kompensiert werden kann.

Die Korrekturrechnung über die Relativgeschwindigkeit ist ungünstig, unter anderem wegen des Zeitaufwands für die Ermittlfung eines Geschwindigkeitswerts und dessen nur mäßige Genauigkeit.

Um die Probleme der Überlagerung von Dopplerkomponenten auf die Empfangssignale und die daraus resultierende Notwendigkeit zur Korrekturrechnung zu umgehen beschreibt die Schrift US 4849762 A1 ein Verfahren und eine Vorrichung, welche zur Ermittlung der Reflexionseigenschaften eines Körpers gleichzeitig drei unterschiedlich polarisierte, elektromagnetische Wellen aussendet. Hierzu wird auf die Stokes-Vektor-Beschreibung der elektromagnetischen Welle, welche vom zu vermessenden Körper reflektiert wurden, zurückgegriffen. Beim Stokes-Vektor handelt es sich um einen reell-wertigen Vektor, der 4 Elemente enthält, welche die Polarisation einer elektromagnetischen Welle beschreiben. Zur Charakterisierung der Reflexionseigenschaften eines Körpers ermittelt das in US 4849762 A1 beschriebene Verfahren die Müllermatix (eine reell-wertige 4x4 Matrix), welche die Beziehung zwischen einer durch einen Stokes-Vektor beschriebenen einfallenden Welle und einer einen Stokes-Vektor beschriebenen reflektierten Welle angibt. Jedoch birgt dieses Verfahren, welches auf der Stokes-Vektor-Beschreibung und einer Müllermatrix-Repräsentation beruht, den Nachteil, daß die Ermittlung einer Phasenbeziehung im Gegensatz zu einer Streumatrix-Repräsentation zwischen ausgesandter und empfangener Welle nicht möglich ist.

Die Aufgabe der vorliegenden Erfindung ist es, ein Verfahren und eine dafür geeignete Vorrichtung anzugeben, welche es erlaubt, die Streumatrix eines Reflexionskörpers zu bestimmen, ohne eine dem Reflexionssignal überlagerte Dopplerkomponente durch eine zusätzliche Korrekturrechnung kompensieren zu müssen.

Das erfindungsgemäße Verfahren ist im Patentanspruch 1, die erfindungsgemäße Radaranordnung im Patentanspruch 4 beschrieben. Die Unteransprüche enthalten vorteilhafte Ausgestaltungen und Weiterbildungen der Erfindung.

Wesentlich an dem erfindungsgemäßen Radarverfahren ist, daß zu drei verschiedenen Sende-Polarisationsrichtungen drei Wertepaare von in orthogonalen Polarisationen aufgenommenen Empfangssignalen gewonnen werden, und daß aus diesen drei Wertepaaren dopplerunabhägig die Streucharakteristik eines Ziels insbesondere in Form einer Streumatrix ermittelt werden kann. Hierdurch entfällt die Korrekturrechnung auf der Grundlage einer zuvor zu bestimmenden Relativgeschwindikeit. Die Information ist in den Amplituden und den gegenseitigen Phasen der orthogonal polarisierten Empfangssignale enthalten. Vorzugsweise sind zwei der Sendepolarisationen orthogonal zueinander gewählt.

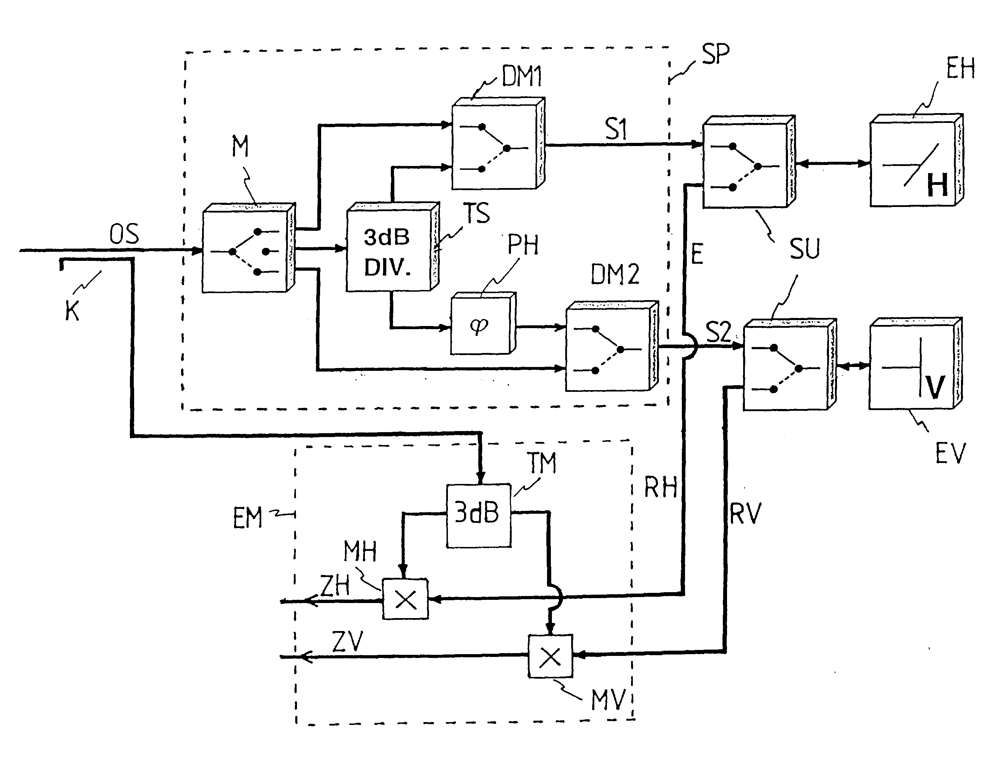

Die Erfindung ist nachfolgend anhand von Ausführungsbeispielen unter Bezugnahme auf die Abbildung noch eingehend veranschaulicht.

Zwei Antennenelemente EV und EH bilden eine Sende-Empfangs-Antenne. Die Antennenelemente seien für orthogonale Polarisationen ausgelegt, beispielsweise EH für horizontale (H) und EV für vertikale (V) Polarisation. Die Antennenelemente sind über Sende-Empfangs-Umschalter SU wahlweise für den Sendefall mit einem Speisenetzwerk SP oder einer Empfangsmischeranordnung EM verbindbar.

Im Sendefall kann durch Wahl der Amplituden- und Phasenbeziehung der Speisesignale für die beiden Antennenelemente eine an sich beliebige resultierende Polarisation der Sende-Empfangs-Antenne eingestellt werden. Das Speisenetzwerk ist vorteilhafterweise so gestaltet, daß mit nur wenigen schaltbaren Elementen und Signalwegen drei verschiedene Sendepolarisationen einstellbar sind. Insbesondere kann das Speisenetzwerk einen 1:3-Multiplexer M enthalten, der ein eingangsseitig anliegendes Oszillatorsignal OS auf einen seiner drei Ausgänge weiterleitet.

Im skizzierten vorteilhaften Beispiel führt ein erster Ausgang des Multiplexers M in der eingezeichneten Schalterstellung nur zu dem einen Antennenelement EH, in der mit unterbrochener Linie angedeuteten Schalterstellung nur zu dem anderen Antennenelement EV. In der mittleren Schalterstellung des Multiplexers wird das Oszillatorsignal über den dritten Ausgang des Multiplexers einem Verzweigungsglied TS, vorzugsweise einem 3dB-Leistungsteiler, zugeführt, dessen beide Ausgänge zu je einem der beiden Antennenelemente EV, EH führen. Zur Entkopplung der einzelnen Signalwege im Speisenetzwerk können 2:1-Demultiplexer DM1, DM2 vorgesehen sein. Mittels eines Phasenstellglieds PH in der Zuleitung zu einem der Antennenelemente, z.B. zwischen dem Verzweigungsglied TS und einem der Demultiplexer, kann ein definierter Phasenunterschied φ zwischen den den Antennenelementen zugeführten Signalanteilen, und damit die resultierende Polarisation einer abgestrahlten Welle, eingestellt werden.

Vorzugsweise ist $φ = 90°$, so daß sich durch Umschalten des Multiplexers M eine horizontale, eine vertikale und eine zirkulare Sendepolarisation einstellen läßt.

Im Empfangsfall sind die Sende-Empfangs-Umschalter SU in die mit unterbrochener Linie angedeutete Stellung gebracht und die von den orthogonal polarisierten Antennenelementen aufgenommenen Antennensignale RH, RV werden über die Umschalter SU getrennt zwei parallelen Empfangskanälen zugeleitet. In jedem Empfangskanal ist ein Frequenzumsetzer MH bzw. MV vorhanden, in welchem die hochfrequenten Antennensignale RH, RV mittels eines Mischsignals ins Basisband oder auf eine Zwischenfrequenzlage umgesetzt werden. Das Mischsignal wird vorzugsweise über einen Koppler K aus der das Oszillatorsignal OS führenden Zuleitung zum Multiplexer M ausgekoppelt und über einen 3dB-Teiler TM auf die beiden Umsetzer MH, MV verteilt.

Vorzugsweise sind das Speisenetzwerk, die Umschalter sowie der Umsetzer mit 3dB-Teiler und Koppler monolithisch in einem Halbleitersubstrat integriert. Die Zuleitung zu dem Eingang des Multiplexers ist dann die einzige hochfrequente Signale führende Schnittstelle zu außerhalb des Substrats angeordneten Teilen der Radaranordnung. Die getrennten Empfangskanäle zu orthogonal polarisierten Antennenelementen liefern am Ausgang der Umsetzer MH, MV wiederfrequente oder zwischenfrequente Empfangssignale ZH, ZV, die bevorzugt nach Abtastung digital weiterverarbeitet werden.

Durch die Polarisationstrennung liefern die Empfangssignale Informationen über die polarisationsabhängigen Streueigenschaften eines Ziels. Üblich ist es, zu zwei orthogonalen Sendepolarisationen jeweils die Empfangssignale in orthogonalen Polarisationen zu bestimmen. Die komplexen Werte der Empfangssignale können nach Normierung unmittelbar als Komponenten einer zur Beschreibung der polarisationsabhängige Streucharakteristik eines Ziels gebräuchlichen Streumatrix eingesetzt werden, wenn Radaranordnung und Ziel bei beiden Sendepolarisationen in identischer räumlicher Zuordnung stehen. Im Realfall ist aber von einer Relativbewegung zwischen Radaranordnung und Ziel auszugehen, so daß sich eine Dopplerkomponente überlagert, die durch eine Phasenkorrekturrechnung bei bekannter Relativgeschwindigkeit kompensiert werden kann.

Wesentlich bei der Erfindung ist, daß dazu eine dritte Sendepolarisation benutzt wird. Es ergeben sich damit zeitsequentiell Empfangssignal-Wertepaare zu drei verschiedenen Polarisationen. Aus diesen drei Wertepaaren kann dopplerunabhängig die Streucharakteristik eines Ziels ermittelt werden.

Beispielsweise kann die Wellenbeschreibung eines Sendesignals E mittels eines komplexen Amplitudenvektors $E = (E_x, E_y)$ vorgenommen werden, ebenso die eines reflektierten Empfangssignals mittels eines weiteren Vektors $E' = (E'_x, E'_y)$, welche über die Streumatrix S des reflektierenden Ziels gemäß

$$E' = S \cdot E$$

verbunden sind. Durch Bilden je eines komplexen Amplitudenquotienten $q = E_y/E_x$ für das Sendesignal und $q' = E'_y/E'_x$ kann der in beiden Vektorkomponenten gleiche Dopplerfaktor eliminiert werden. Es ergibt sich eine Beziehung

$$q' = \frac{S_{21} + S_{22} \cdot q}{S_{11} + S_{12} \cdot q}$$

mit $S_{mn}$ als Komponenten der Streumatrix.

Es läßt sich zeigen, daß durch Bestimmen von Amplitudenquotientenpaaren $(q_i, q'_i)$ zu drei verschiedenen Sendepolarisationen die Struktur der Streumatrix vollständig bestimmt werden kann.

Andere Wellenbeschreibungen, z.B. mittels der den Amplitudenquotienten zuordnungsbaren Polarisationsvektoren führen zum selben Ergebnis. Für den bevorzugten speziellen Fall mit vertikaler, horizontaler und zirkularer Sendepolarisation und horizontaler und vertikaler Empfangspolarisation nimmt die digitale Verarbeitung der Signale besonders einfache Formen an.

Die Phasenkorrelation von Signalen zeitlich aufeinanderfolgender Abschnitte mit unterschiedlicher Sendepolarisation ist nicht mehr gefordert. Von Bedeutung sind die normierten Amplituden der Empfangssignale, die relative Phasenlage der Signale in den beiden Empfangskanälen und die Zuordnung zur jeweiligen Sendepolarisation. Die Wahl der drei Sendepolarisationen ist an sich beliebig, bevorzugt ist aber die Kombination zweier orthogonaler Polarisationen mit einer weiteren, durch gleichgewichtete Kombination dieser beiden sich ergebenden Polarisationen. Die Auswertung der Empfangssignale erfolgt in einer nicht mit eingezeichneten digitalen Auswerteeinrichtung außerhalb des Halbleitersubstrats.

Die Radaranordnung arbeitet vorzugsweise als Pulsradar. In den Empfangsphasen liefert das Oszillatorsignal das Mischsignal für die Umsetzer, wobei die Umsetzung in eine Zwischenfrequenzlage durch eine Umschaltung der Oszillatorfrequenz von Sendephase zu Empfangsphase zwischen einer Sendefrequenz und einer Mischerfrequenz erfolgt.

## Patentansprüche

1. Verfahren zur Ermittlung der Streumatrix eines Reflexionskörpers, bei welchem eine dem Reflexionssignal überlagerte Dopplerkomponente nicht durch eine zusätzliche Korrekturrechnung kompensiert werden muß,
dadurch gekennzeichnet,
daß der komplexe Amplitudenquotient des reflektierten Signals in Beziehung zum komplexen Amplitudenquotienten des ausgesandten Signals betrachtet wird, und daß aus der Betrachtung von drei solcher Beziehungen bezüglich drei ausgesandter, verschieden polarisierter Wellen die Parameter der Streumatrix bestimmt werden.

2. Verfahren nach Anspruch 1, dadurch gekennzeichnet, daß eine der drei ausgesandten, verschieden polarisierten Wellen durch die Überlagerung der zwei anderen zueinander orthogonal polarisierten Wellen generiert wird.

3. Verfahren nach einem der Ansprüche 1 oder 2, dadurch gekennzeichnet, daß zur Generierung der Frequenz der ausgesandten Wellen und der Frequenz, mit welcher die reflektierten Signale heruntergemischt werden ein einzelner Oszillator in seiner Frequenz geschaltet wird.

4. Vorrichtung zur Ermittlung der Streumatrix eines Reflexionskörpers, bei welchem eine dem Reflexionssignal überlagerte Dopplerkomponente nicht durch eine zusätzliche Korrekturrechnung kompensiert werden muß,
dadurch gekennzeichnet,
daß das Speisenetzwerk zum Aussenden von drei verschieden polarisierten Wellen einen 1:3-Mulitplexer, zwei 2:1-Demultiplexer und ein Verzweigungsglied in der Weise enthält, daß je ein Eingang der Demultiplexer unmittelbar mit je einem Ausgang des Multiplexers und der jeweils zweite Eingang der Demultiplexer mittelbar über das Verzweigungsglied mit dem übrigen Ausgang des Multiplexers verbunden ist.

5. Vorrichtung nach Anspruch 4, dadurch gekennzeichnet, daß zur Generierung der Frequenz der ausgesandten Wellen und der Frequenz, mit welcher die reflektierten Signale heruntergemischt werden ein einzelner, in seiner Frequenz schaltbarer Oszillator vorgesehen ist.

## Claims

1. Method for ascertaining the scattering matrix of a reflection body, in which a Doppler component superimposed on the reflection signal is not to be compensated by an additional corrective computation, characterised in that the complex amplitude quotient of the reflected signal is considered in relationship to the complex amplitude quotient of the emitted signal, and that the parameters of the scattering matrix are determined from the consideration of three such relationships with respect to three emitted, differently polarised waves.

2. Method according to claim 1, characterised in that one of the three emitted, differently polarised waves is generated by the superimposition of two other mutually orthogonally polarised waves.

3. Method according to one of claims 1 and 2, characterised in that a single oscillator is switched in its frequency for generation of the frequency of the emitted waves and the frequency at which the reflected signals are mixed down.

4. Device for ascertaining the scattering matrix of a reflection body, in which a Doppler component superimposed on the reflection signal is not to be compensated by an additional corrective computation, characterised in that the supply network for transmitting three differently polarised waves comprises a 1:3 multiplexer, two 2:1 demultiplexers and a branching element in such a manner that a respective input of the demultiplexer is directly connected with a respective output of the multiplexer and the respective second input of the demultiplexer is directly connected by way of the branching element with the remaining output of the multiplexer.

5. Device according to claim 4, characterised in that a single oscillator switchable in its frequency is provided for generation of the frequency of the emitted waves and the frequency by which the reflected signals are mixed down.

## Revendications

1. Procédé pour déterminer la matrice de dispersion d'un corps réfléchissant, selon lequel une composante Doppler superposée au signal de réflexion ne doit pas être compensée par un calcul de correction supplémentaire,
caractérisé en ce
que la relation du coefficient complexe des amplitudes du signal réfléchi avec le coefficient complexe des amplitudes du signal émis est observée et que les paramètres de la matrice de dispersion sont déterminés à partir de l'observation de trois relations de cette sorte concernant trois ondes émises polarisées différemment.

2. Procédé selon la revendication 1, caractérisé en ce que l'une des trois ondes émises polarisées différemment est produite par la superposition des autres ondes polarisées orthogonalement entre elles.

3. Procédé selon l'une des revendications 1 ou 2, caractérisé en ce que la fréquence d'un oscillateur individuel est commutée pour la production de la fréquence des ondes émises et de la fréquence avec laquelle les signaux réfléchis sont mélangés dans le sens d'un abaissement de la fréquence.

4. Dispositif pour déterminer la matrice de dispersion d'un corps réfléchissant, selon lequel une composante Doppler superposée au signal de réflexion ne doit pas être compensée par un calcul de correction supplémentaire,
caractérisé en ce
que le réseau d'alimentation contient, pour l'émission de trois zones polarisées différemment, un multiplexeur 1:3 deux démultiplexeurs 2:1 et un circuit de ramification de telle sorte qu'une entrée respective des démultiplexeurs est reliée directement à une sortie respective du multiplexeur et que la seconde entrée respective des démultiplexeurs est reliée indirectement, par l'intermédiaire du circuit de ramification à l'autre sortie du multiplexeur.

5. Dispositif selon la revendication 4, caractérisé en ce qu'un oscillateur, dont la fréquence est commutable, est prévue pour la production de la fréquence des ondes émises et de la fréquence, avec laquelle les signaux réfléchis sont mélangés avec réduction de leur fréquence.